# EUROPÄISCHE PATENTSCHRIFT

(11) **EP 2 306 418 B1**
(45) Veröffentlichungstag und Bekanntmachung des Hinweises auf die Patenterteilung: **07.11.2012**
(21) Anmeldenummer: 10009598.3
(22) Anmeldetag: 15.09.2010
(51) Int. Cl.: G07F 15/00, E05B 47/02, E05B 65/00, B60L 11/18, E05B 65/08

(54) **Stromtankstelle**
Electricity charging point
Station service électrique

(30) Priorität: 16.09.2009 DE 102009041874
(43) Veröffentlichungstag der Anmeldung: 06.04.2011
(73) Patentinhaber: Langmatz GmbH, 82467 Garmisch-Partenkirchen (DE)
(72) Erfinder: Wulf, Stephan, 82467 Garmisch-Partenkirchen (DE); Bauer, Hubert, 82467 Garmisch-Partenkirchen (DE)
(74) Vertreter: Flosdorff, Jürgen

(56) Entgegenhaltungen:
- WO-A1-2004/016887
- FR-A1- 2 742 250
- GB-A- 2 438 979
- US-A- 5 385 480

## Beschreibung

Die Erfindung betrifft eine Stromtankstelle für Kraftfahrzeuge mit Elektroantrieb, die ein aufladbares Batteriesystem aufweisen, wobei die Stromtankstelle ein Gehäuse mit einer verschieblich angeordneten Klappe aufweist, hinter der eine Ladebuchse angeordnet ist, in die bei geöffneter Klappe ein Stecker eines Ladekabels einsteckbar ist, wobei außerdem in dem Gehäuse ein Verriegelungsmechanismus für die Klappe und eine ChipkartenLese/Identifikationseinrichtung untergebracht sind. Diese ChipkartenLese/Identifikationseinrichtung steht mit dem Verriegelungsmechanismus über eine Leitung in Verbindung, um Signale zur Betätigung des Verriegelungsmechanismus abgeben zu können.

Derartige Stromtankstellen können an herkömmlichen Kraftstofftankstellen oder beispielsweise auf Parkplätzen von Einkaufsmärkten oder weit über ein Stadtgebiet verteilt an Straßenbeleuchtungsmasten angeordnet sein. Da sich damit die Stromtankstellen häufig an Orten befinden, an denen sie völlig unbeaufsichtigt sind, ist es wichtig, dass nur solche Personen, die zur Benutzung der Stromtankstelle befugt sind, Zugang zum Inneren des Gehäuses der Stromtankstelle zum Laden des Batteriesystems ihres Kraftfahrzeugs erlangen.

Die GB 2 438 979 A offenbart eine Stromtankstelle für Kraftfahrzeuge mit Elektroantrieb mit einer schwenkbaren Klappe. Der zugehörige Verriegelungsmechanismus enthält einen nach innen ragenden Pin, der in einer Öffnung des Gehäuses mittels eines Solenoids verriegelbar ist. Der Pin hat hierzu eine ringförmige Aussparung, in die das Verriegelungsglied des Solenoids eingreifen kann. Wenn ein hebelartiges Werkzeug unter die Klappe eingeführt und durch Hebelwirkung von dem Gehäuse abgehoben wird, kann beispielsweise der Pin oder der die Öffnung enthaltende Gehäuseabschnitt abbrechen.

Die FR 2 742 250 A1 offenbart ebenfalls eine Stromtankstelle mit einer schwenkbaren Klappe, ohne dass ein Verriegelungsmechanismus beschrieben ist.

Die WO 2004/016887 A1 offenbart ein elektrisches Schloss, mit dem beispielsweise eine Tür gegenüber dem zugehörigen Rahmen verriegelbar ist. Das Schloss ist an der schwenkbaren Tür befestigt und enthält einen Schiießbolzen 2, der mittels eines elektrischen Aktuators 10 vorschiebbar ist, um in eine Aussparung eines Schließblechs des Türrahmens einzutreten.

Die Erfindung sieht vor, dass der Verriegelungsmechanismus ein Verriegelungsglied, das zu der Klappe vorschiebbar ist, bis es in die Bewegungsbahn der Klappe hineinragt, und von der Klappe zurück ziehbar ist, und eine Antriebseinheit für das Verriegelungsglied aufweist, die auf Signale der Chipkarten-Lese/Identifikationseinrichtung hin das Verriegelungsglied vorschiebt oder zurück zieht. Hierzu ist eine Verriegelungswelle vorgesehen, die zwischen zwei vorbestimmten Drehlagen drehbar ist, wobei das vorzugsweise etwa stabförmige Verriegelungsglied gelenkig an einer bevorzugt seitlich an der Verriegelungswelle angesetzten Lasche angebracht ist und bei Drehung der Verriegelungswelle zwischen zwei Führungsgliedern hin und her bewegbar ist, wobei das Verriegelungsglied beim Drehen der Verriegelungswelle in einer ersten Drehrichtung zu der Klappe vorgeschoben wird, bis es in die Bewegungsbahn der Klappe hinein ragt und die Klappe damit blockiert, und beim Drehen der Verriegelungswelle in die entgegengesetzte zweite Drehrichtung von der Klappe zurück gezogen wird, so dass die Klappe geöffnet werden kann, damit ein Benutzer Zugang zu der Ladebuchse in dem Gehäuse erhält. Dabei ist bevorzugt, dass die Schiebeklappe von Hand nach oben geschoben wird, um die Zutrittsöffnung frei zu geben, wobei sie nach Beendigung des Ladevorgangs entweder durch Schwerkraft oder beispielsweise durch Federkraft wieder in die untere Verschlussposition zurück kehren kann.

Außerdem ist eine Antriebseinheit für die Verriegelungs-welle vorgesehen, die mit einer Steuereinrichtung versehen ist, die Signale der Chipkarten-Lese/Identifikationseinrichtung empfangen kann und daraufhin die Verriegelungswelle in die erste oder zweite Drehrichtung drehen lässt, wie weiter unten noch näher beschrieben wird.

Die Antriebseinheit kann z.B. ein elektrischer Rotationsmotor sein. Bevorzugt ist jedoch, dass die Antriebseinheit eine elektrisch betätigbare Kolben/Zylindereinheit ist, deren vorschiebbarer und zurückziehbarer Kolben über ein gelenkig gelagertes Zwischenglied mit einer seitlich an der Verriegelungswelle angebrachten Lasche verbunden ist. Wenn der Kolben der vorzugsweise über der Verriegelungswelle angeordneten Kolben/Zylindereinheit nach unten ausgefahren wird, wird in einer Ausführungsform der Erfindung das Verriegelungsglied von der Klappe zurück gezogen (hier als zweite Drehrichtung bezeichnet), während das Zurückziehen des Kolbens in den Zylinder die entgegengesetzte Bewegung des Verriegelungsgliedes, nämlich in die Bewegungsbahn der Klappe, zur Folge hat (hier als erste Drehrichtung bezeichnet).

In einer zweckmäßigen Ausgestaltung der Erfindung ist an der Innenseite der Klappe eine Verstärkungswand angebracht, die im Abstand vor der Oberkante und der Unterkante der Klappe endet, wobei das Verriegelungsglied bis zu der eigentlichen Wand der Klappe vorschiebbar ist und der zugewandten Randkante der Verstärkungswand dabei gegenüberliegt.

Das Gehäuse der Stromtankstelle und die Schiebeklappe bestehen zweckmäßigerweise aus einem harten Kunststoff, während der Verriegelungsmechanismus zweckmäßigerweise aus einem geeigneten Metall besteht.

Außerdem ist vorzugsweise auf einer abgeflachten Oberseite der unter der Verriegelungswelle positionierten Ladebuchse eine Blockierungseinrichtung für den in die Ladebuchse einzusteckenden Stecker angeordnet, die an einem schwenkbar gelagerten Hebel eine Blockierungsnase aufweist, die durch Drehen der Verriegelungswelle in die erste Drehrichtung in eine Aussparung des Steckerkörpers gedrückt wird, wenn der Stecker vollständig in die Ladebuchse eingesteckt ist. Die Ladebuchse hat dabei ein Fenster in ihrer hülsenförmigen Wand, durch das die Blockierungsnase hindurch tritt und in die entsprechend positionierte Aussparung des Steckers eintritt. Auch wenn eine kräftige Zugkraft auf den Stecker ausgeübt wird, um diesen aus der Ladebuchse heraus zu ziehen, kann die Blockierungsnase nicht aus der Aussparung des Steckers austreten, da sie in ihrer Eingriffsposition durch die Verriegelungswelle gehalten ist.

Hierzu hat die Verriegelungswelle an einem mit dem schwenkbaren Hebel fluchtenden Bereich eine sich über einen Umfangsabschnitt erstreckende Aussparung, die eine solche Tiefe hat, dass der schwenkbare Hebel in der zweiten Drehlage der Verriegelungswelle im angehobenen Zustand in die Aussparung eingreift und die Blockierungsnase nicht ins Innere der Ladebuchse hineinragt, wobei die Tiefe der Aussparung der Verriegelungswelle in Drehrichtung zu der ersten Drehlage bis zu 0 abnimmt, so dass der schwenkbare Hebel von der sich in die Verriegelungsposition drehenden Verriegelungswelle gegen die Oberseite der Ladebuchse gedrückt wird und die Blockierungsnase in die Aussparung des eingesteckten Steckers eingreift und von der Verriegelungswelle darin gehalten ist.

Der schwenkbare Hebel ist dabei vorzugsweise durch Federkraft in die angehobene Stellung vorgespannt.

Der Verriegelungsmechanismus der erfindungsgemäßen Stromtankstelle funktioniert folgendermaßen: Wenn eine Person das Batteriesystem ihres Kraftfahrzeugs laden möchte, hält sie eine für den Ladevorgang erforderliche Chipkarte vor einen vorzugsweise durch ein entsprechendes Symbol gekennzeichneten Gehäuseabschnitt, so dass eine in dem Gehäuse befindliche Chipkarten-Lese/Identifikationseinrichtung die Zugangsberechtigung zu der Stromtankstelle überprüfen kann und die Daten des Chipkarteninhabers aufnimmt. Hierzu kann die Chipkarten-Lese/Identifikationseinrichtung eine Platine mit einem Antennenteil aufweisen, die innerhalb des Gehäuses angeordnet ist und eine außerhalb des Gehäuses positionierbare Chipkarte lesen kann, wobei bei Berechtigung des Benutzers zu einem Ladevorgang ein Signal an ein Relais abgegeben werden kann, das den Stromkreis für den Ladevorgang frei schaltet. Außerdem wird ein Signal erzeugt, das veranlasst, dass die Antriebseinheit des Verriegelungsmechanismus die Verriegelungswelle in die als zweite Drehrichtung bezeichnete Richtung dreht, so dass das bis dahin an der Schiebeklappe anliegende Verriegelungsglied zurück gezogen wird. Damit ist die Schiebeklappe entriegelt, und der Benutzer kann die Klappe nach oben schieben, wodurch die Ladebuchse frei liegt.

Der Benutzer steckt nun den Stecker seines Ladekabels in die Ladebuchse ein. Durch einen Kontakt wird ein Signal an die Steuereinheit der Antriebseinheit für die Verriegelungswelle abgegeben, beispielsweise durch eine mit dem Steuerteil verbundene Leitung, woraufhin die Antriebseinheit die Verriegelungswelle in die erste Drehrichtung dreht, wobei der schwenkbare Blockierungshebel, der zunächst im angehobenen Zustand in die Aussparung der Verriegelungswelle hineinragte, in Richtung der Ladebuchse gedrückt wird, so dass die am Ende des schwenkbaren Hebels angebrachte Blockierungsnase durch das Fenster in der Wand der Ladebuchse hindurch und in die Aussparung des Steckers eintritt. Diese Aussparung kann dabei als Sackbohrung ausgebildet sein.

Bei diesem Vorgang ist das Verriegelungsglied bis zur Schiebeklappe vorwärts bewegt worden und liegt der unteren Randkante der inneren Verstärkungswand der Schiebeplatte gegenüber.

Während des nun erfolgenden Ladevorgangs kann der Stecker nicht aus der Ladebuche heraus gezogen werden, was anderenfalls beispielsweise eine Gefährdung des unsachgemäß handelnden Benutzers mit sich bringen würde.

Nach Beendigung des Ladevorgangs positioniert der Benutzer seine Chipkarte wiederum vor der Chipkarten-Lese/Identifikationseinrichtung, die daraufhin den Stromkreis abschaltet und ein Signal an die Steuereinheit der Antriebseinheit abgibt, die die Verriegelungswelle in der zweiten Drehrichtung dreht, wodurch der federbeaufschlagte schwenkbare Hebel die Blockierungsnase aus dem Stecker heraus zieht, der damit frei gegeben ist.

Wenn der Stecker aus dem Gehäuse entnommen worden ist, schließt sich die Schiebeklappe, die von dem Verriegelungsglied freigegeben ist, beispielsweise selbsttätig durch Schwerkraft oder durch Federkraft. Durch das Schließen der Schiebeklappe wird - z.B. über entsprechende Kontakte und Leitungen - ein abschließendes Signal an die Antriebseinheit abgegeben, die die Verriegelungswelle wieder in der ersten Drehrichtung dreht, so dass das Verriegelungsglied zum oberen Randbereich der Schiebeklappe vorgeschoben wird, wo das Verriegelungsglied im Wesentlichen an der Randkante der Verstärkungswand der Schiebeklappe anliegt und damit das Hochziehen der Klappe zuverlässig verhindert.

Weitere Merkmale und Einzelheiten der Erfindung ergeben sich aus der nachfolgenden Beschreibung und den beigefügten Zeichnungen. Dabei zeigen:
- Figur 1: eine perspektivische Ansicht einer Stromtankstelle;
- Figur 2: den Verriegelungsmechanismus im Verriegelungszustand;
- Figur 3: den entriegelten Zustand der Schiebeklappe der Stromtankstelle;
- Figur 4: die Stromtankstelle mit geöffneter Schiebeklappe;
- Figur 5: die Stromtankstelle mit in die Ladebuchse eingestecktem Stecker eines Ladekabels;
- Figur 6: die Anordnung gemäß Figur 5 aus einer rückwärtigen Perspektive mit einer Blockierungseinrichtung für den Stecker im unblockierten Zustand;
- Figur 7: eine Darstellung ähnlich Figur 6, jedoch mit blockiertem Stecker und

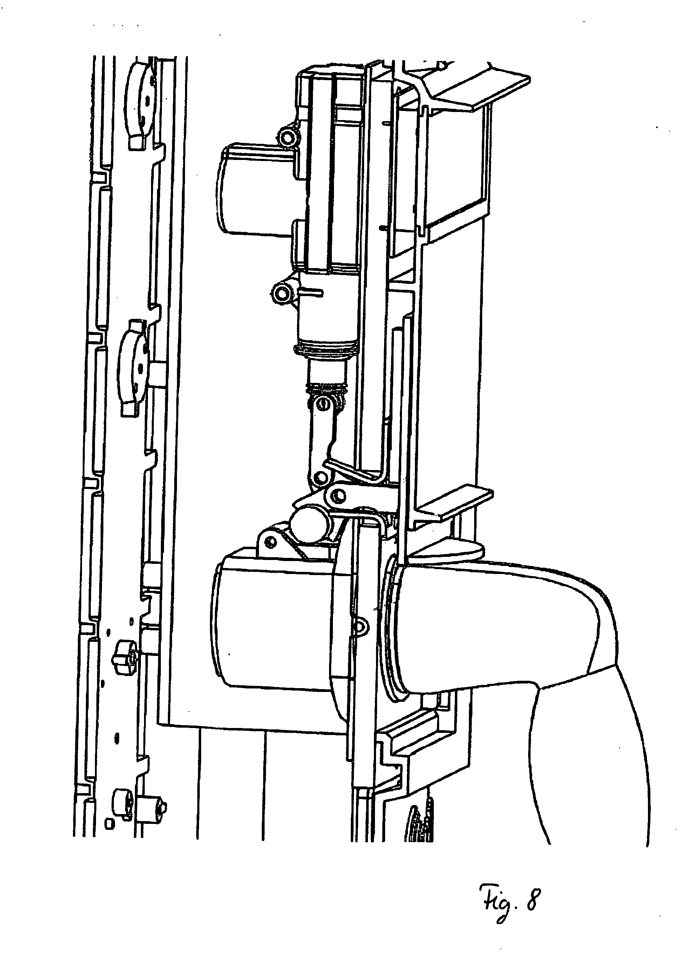

- Figur 8: den Zustand gemäß Figur 7 aus einer anderen Perspektive.

Die Figuren zeigen eine bevorzugte Ausführungsform einer Stromtankstelle mit ihren für die vorliegende Erfindung wesentlichen Bauteilen. Die Erfindung ist nicht auf die dargestellte und beschriebene Ausführungsform beschränkt.

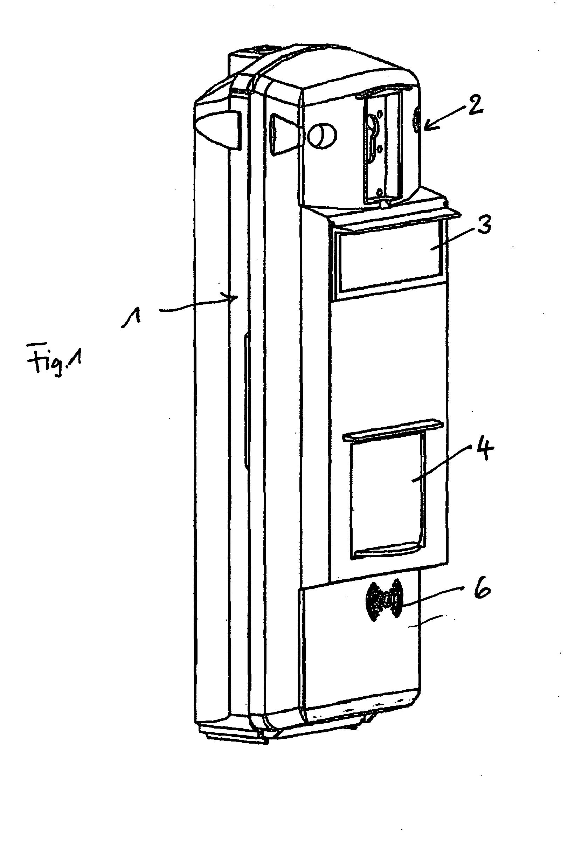

Figur 1 zeigt eine perspektivische Ansicht der Stromtankstelle mit geschlossenem Gehäuse 1, das vorzugsweise aus einem harten Kunststoff besteht. Im oberen Bereich des Gehäuses 1 befindet sich ein zu Wartungszwecken entfernbares Gehäuseteil 2, das hier nicht näher von Interesse ist. Unter diesem entfernbaren Gehäuseteil 2 befindet sich ein Fenster 3 mit einem Display, auf dem beispielsweise eine Bedienerführung angezeigt werden kann.

Im Abstand unter dem Fenster 3 ist eine aufwärts und abwärts verschiebbare Klappe 4 angeordnet, die in der angehobenen, geöffneten Position den Zugang zu der Stromtankstelle, d.h. zu ihrer Ladebuchse 5, freigibt. Die Schiebeklappe 4 ist von einer unbefugten Person nicht zu öffnen.

Unterhalb der Schiebeklappe 4 befindet sich innerhalb des Gehäuses 1 eine Chipkarten-Lese/Identifikationseinrichtung, auf die ein Symbol 6 mit einem Funkzeichen hinweist. Wenn ein Benutzer seine Chipkarte vor diesen Gehäusebereich hält, wird seine Berechtigung zu einem Ladevorgang überprüft und bei positivem Ergebnis der Stromkreis zu der Ladebuchse frei gegeben und die Schiebklappe zum Öffnen entriegelt, was weiter unten näher beschrieben wird.

Anstelle einer Funkübertragung der Daten der Chipkarte kann diese auch in einen Schlitz eines Lesegeräts eingeführt werden.

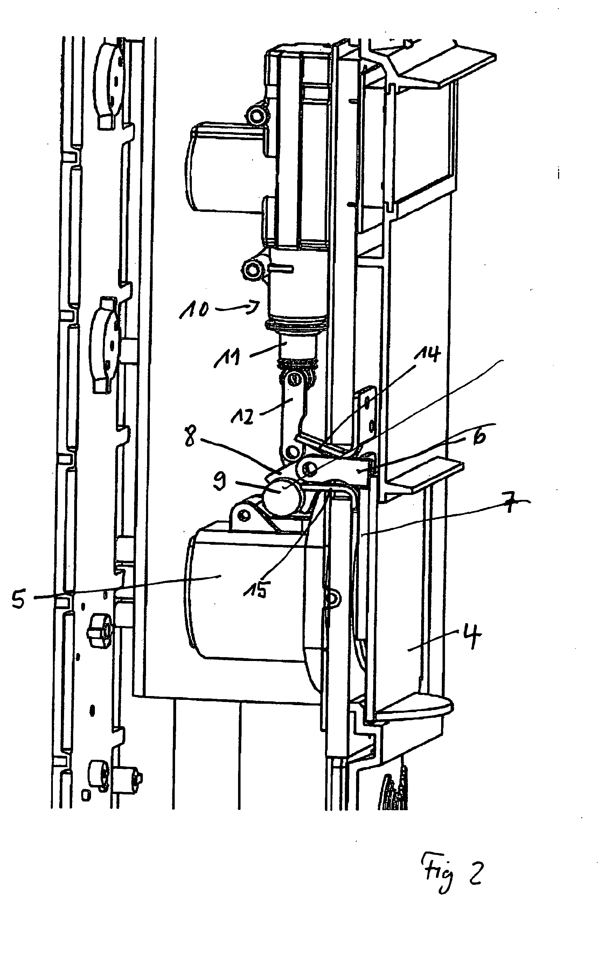

Figur 2 zeigt den Zustand der Stromtankstelle vor Beginn eines Ladevorgangs. Die Schiebeklappe 4 befindet sich im geschlossenen Zustand, in dem sie durch ein Verriegelungsglied 6 gehalten ist, Die Schiebeklappe 4 ist an ihrer Innenseite mit einer Verstärkungswand 7 fest verbunden, die in dem in Figur 2 dargestellten, verriegelten Zustand dem vorderen Endabschnitt des Verriegelungsgliedes 6 gegenüber liegt. Damit kann die Schiebeklappe 4 nicht angehoben werden.

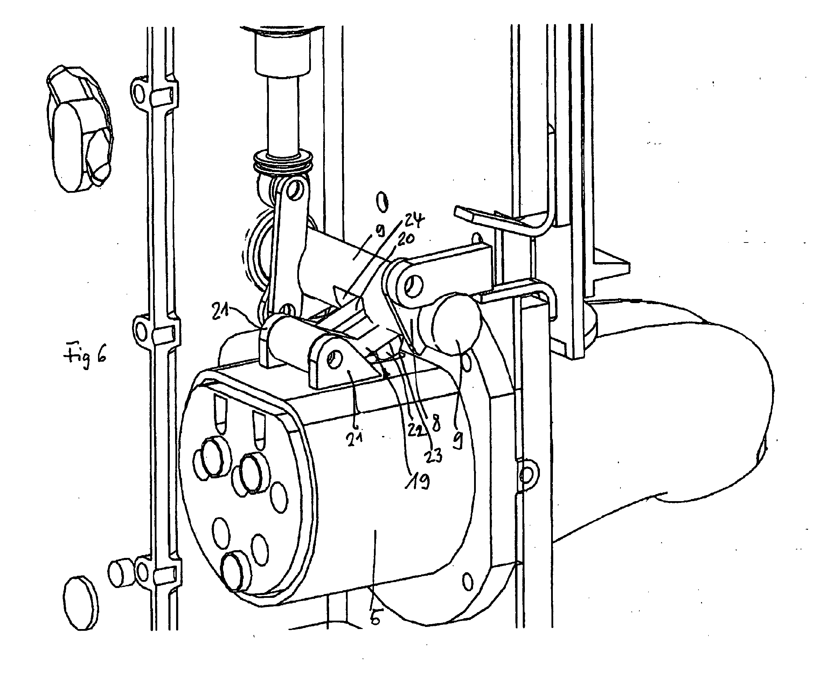

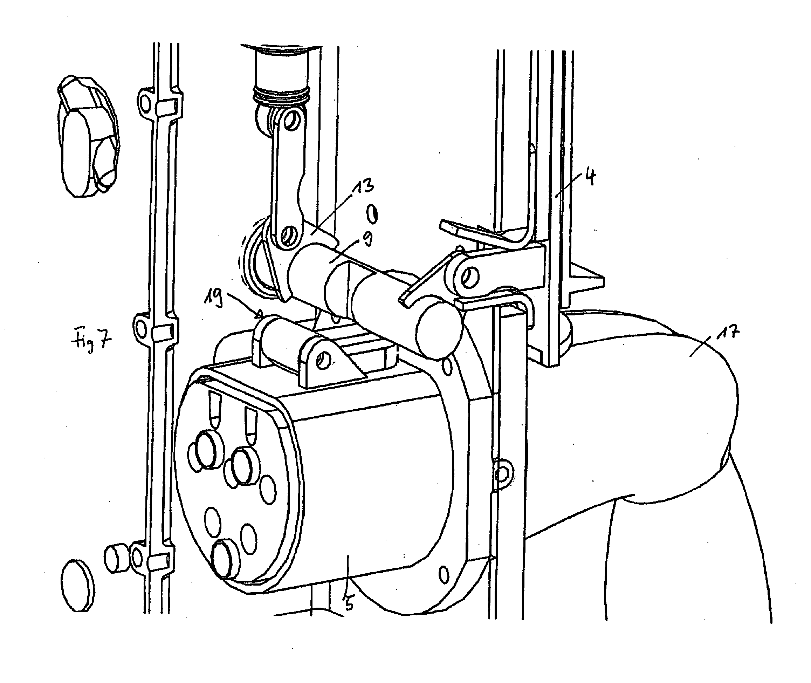

Das Verriegelungsglied 6 ist gelenkig mit einer Lasche 8 verbunden, die seitlich an einer Verriegelungswelle 9 (siehe insbesondere Figuren 6 und 7) fest angesetzt ist.

Als Antriebseinrichtung für die Verriegelungswelle 9 dient eine Kolben/Zylindereinheit 10, deren ausfahrbarer Kolben 11 über ein Zwischenglied 12 gelenkig mit einer weiteren, seitlich von der Verriegelungswelle 9 abstehenden Lasche 13 verbunden ist.

Die Verriegelungswelle 9 ist zwischen zwei vorbestimmten Drehlagen drehbar. In dem in Figur 2 dargestellten Zustand, in dem die Schließstellung der Schiebeklappe 4 gesichert ist, ist das Verriegelungsglied 6 in Anlage an die Schiebeklappe 4 vorgeschoben, so dass die Schiebeklappe 4 wegen der an ihrer Innenseite befestigten Verstärkungswand 7 nicht angehoben werden kann. Das Verriegelungsglied 6 befindet sich dabei zwischen zwei Führungsschienen 14 und 15, zwischen denen das Verriegelungsglied 6 hin und her bewegbar gehalten ist.

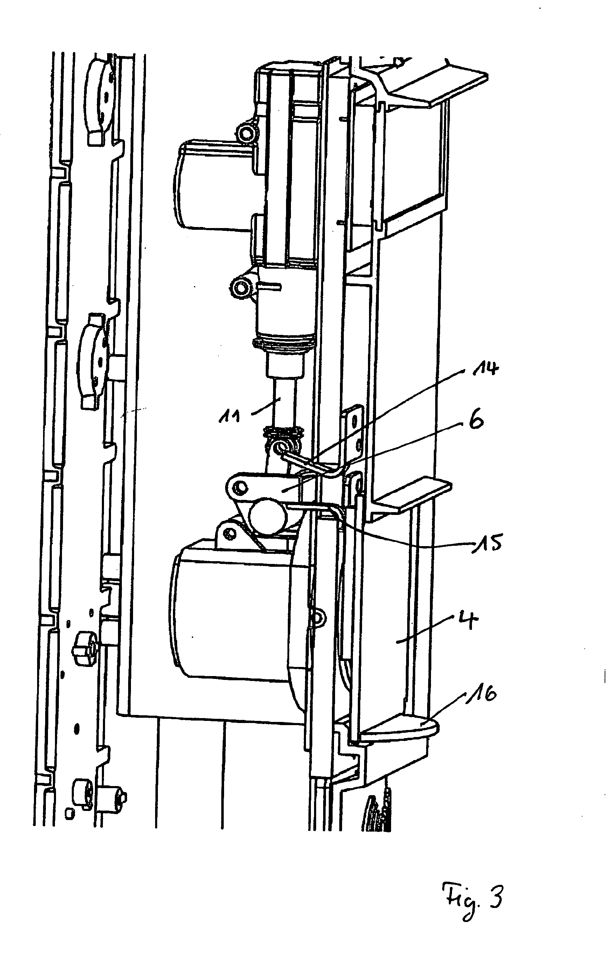

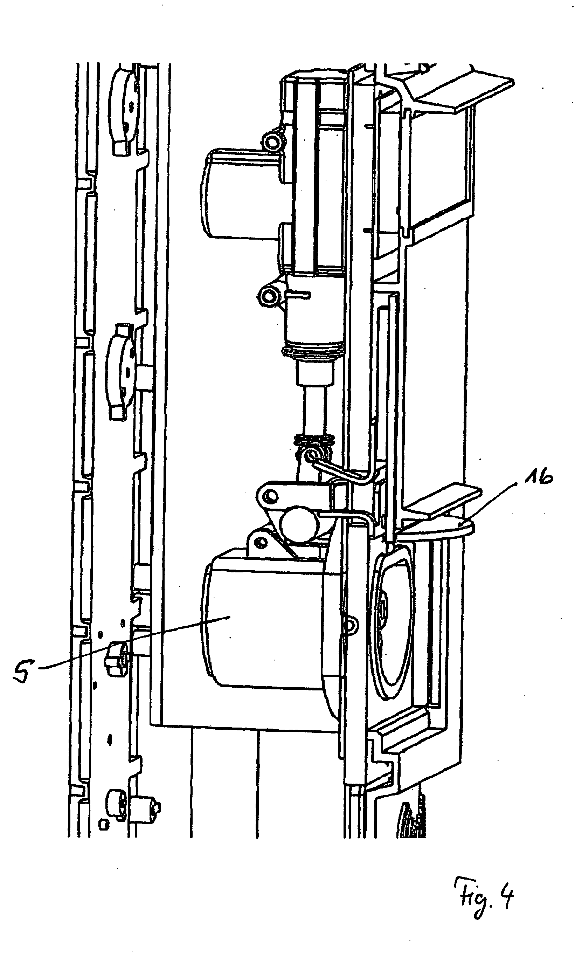

Ausgehend von dem in Figur 2 dargestellten Zustand ist in Figur 3 der Kolben 11 nach unten ausgefahren worden, wodurch sich die Verriegelungswelle 9 in der hier als zweite Drehrichtung bezeichneten Richtung gedreht und das Verriegelungsglied 6 von der Schiebetür 4 zurück gezogen hat. Damit ist die Schiebetür 4 frei gegeben und kann an ihrem unteren Handgriff 16 bequem in die in Figur 4 dargestellte, geöffnete Lage versetzt werden. Damit ist der Zugang zu der Ladebuchse 5 frei gegeben.

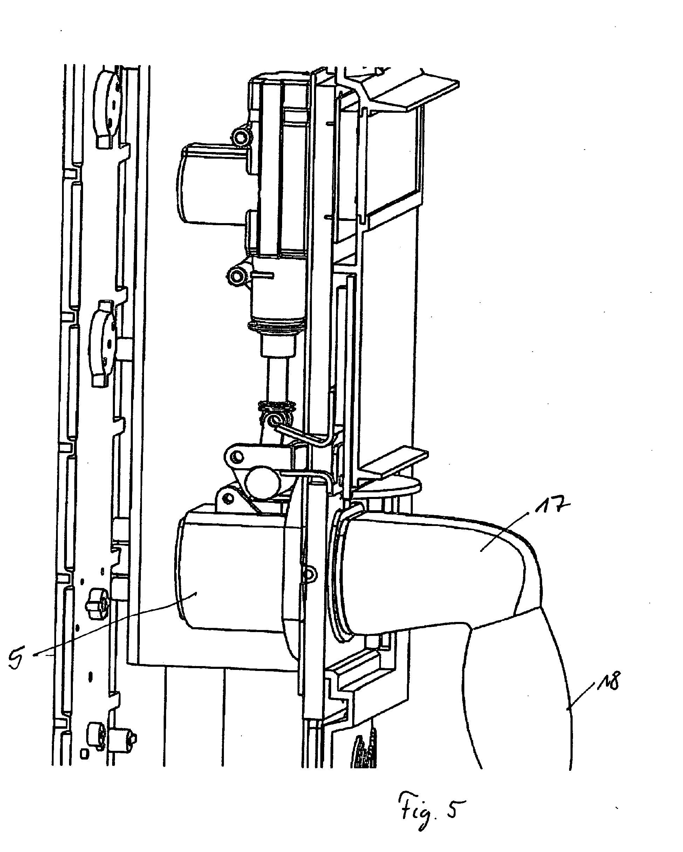

Figur 5 zeigt einen Zustand, in dem ein Stecker 17 eines Ladekabels 18 in die Ladebuchse 5 eingesteckt ist. Hierdurch wird ein Signal erzeugt, das eine Blockierungseinrichtung 19 betätigt, die den Stecker 17 in der Ladebuchse 5 verriegelt. Der Blockierungsmechanismus 19 ist am deutlichsten in den Figuren 6 und 7 dargestellt.

Die Blockierungseinheit 19 enthält einen schwenkbaren Hebel 20, der an zwei von der abgeflachten Oberseite der Ladebuchse 5 abstehenden Lagerlaschen 21 gelenkig gelagert ist und durch eine nicht dargestellte Federeinrichtung in eine in Figur 6 erkennbare, angehobene Stellung vorgespannt ist. An der Unterseite des schwenkbaren Hebels 20 ist eine Blockierungsnase 22 fest angebracht, die durch ein Fenster 23 in der Wand der Ladebuchse 5 hindurch treten und in eine Bohrung des Steckers 17 eintreten kann, wenn der schwenkbare Hebel 20 nach unten gedrückt ist. Die Blockierungsnase 23 kann alternativ z.B. auch einen entsprechend positionierten Vorsprung des Steckers 17 hintergreifen.

Die Verriegelungswelle 9 enthält eine ausgefräste Aussparung 24, deren Tiefe über den zugehörigen Umfangsbereich der Welle 9 variiert. In der in Figur 6 dargestellten Drehlage der Verriegelungswelle 9, in der das Verriegelungsglied 6 zurück gezogen ist, kann der schwenkbare Hebel 20 so tief in die Aussparung 24 eintreten, dass die Blockierungsnase 23 nicht ins Innere der Ladebuchse 6 hineinragt.

Wie oben erwähnt, wird beim Einstecken des Steckers 17 in die Ladebuchse 5 (Zustand der Figur 6) ein Signal an eine Steuereinrichtung der Kolben/Zylindereinheit 10 abgegeben, woraufhin die Verriegelungswelle 9 in die andere Endlage gedreht wird, in der sie das Verriegelungsglied 6 an die Schiebeklappe 4 andrückt - wobei sie der unteren Stirnkante der Verstärkungswand 7 gegenüber liegt. Die Tiefe der Aussparung 24 nimmt beim Drehen der Verriegelungswelle in dieser ersten Drehrichtung bis auf Null ab, wodurch der schwenkbare Hebel 20 nach unten gedrückt wird und die Blockierungsnase 22 durch das Fenster 23 hindurch in den Stecker 17 eingreift. Da die Verriegelungswelle 9 den schwenkbaren Hebel 20 sicher in dieser Lage hält, kann der Stecker 17 während des Ladevorgangs nicht aus der Ladebuchse 5 heraus gezogen werden.

Wenn der Benutzer mit seiner Chipkarte den Ladevorgang beendet, kehrt die Verriegelungswelle 9 wieder in die Drehlage der Figur 6 zurück, in der der Stecker 17 aus der Ladebuchse 5 heraus gezogen werden kann. Da die Schiebeklappe 4 frei gegeben ist, kann sie in die untere Verschlussposition zurück kehren. Dieser Zustand wird durch ein erneutes Vorschieben des Verriegelungsgliedes 6 an die Schiebeklappe 4 gesichert.

Es wird betont, dass die Erfindung nicht auf die beschriebenen und dargestellten Ausführungsformen beschränkt ist. Vielmehr sind alle offenbarten Merkmale auf jede sinnvolle Weise einzeln miteinander kombinierbar.

## Patentansprüche

1. Stromtankstelle für Kraftfahrzeuge mit Elektroantrieb, mit einem Gehäuse mit einer Klappe (4) hinter der eine Ladebuchse (5) angeordnet ist, in die bei geöffneter Klappe (4) ein Stecker (17) eines Ladekabels (18) einsteckbar ist, mit einem Verriegelungsmechanismus für die Klappe (4) und mit einer Chipkarten-Lese/Identifikationseinrichtung,
wobei der Verriegelungsmechanismus ein Verriegelungsglied (6) und eine Antriebseinheit (10) für das Verriegelungsglied (6) aufweist, die auf Signale der Chipkarten-Lese/Identifikationseinrichtung hin das Verriegelungsglied (6) vorschiebt oder zurück zieht,
**dadurch gekennzeichnet dass** die Klappe (4) verschieblich angeordnet ist; und,
dass der Verriegelungsmechanismus eine Verriegelungswelle (9) aufweist, die zwischen zwei vorbestimmten Drehlagen drehbar ist, wobei das Verriegelungsglied (6) gelenkig mit der Verriegelungswelle (9) verbunden und zwischen Führungsgliedern (14,15) bewegbar ist, und beim Drehen der Verriegelungswelle (9) in einer ersten Drehrichtung zu der Klappe (4) vorgeschoben wird, bis es in die Bewegungsbahn der Klappe (4) hineinragt, und beim Drehen der Verriegelungswelle (9) in die zweite Drehrichtung von der Klappe (4) zurück gezogen wird und wobei die Antriebseinheit (10) auf die Signale der Chipkarten-Lese/ldentifikationseinrichtung hin die Verriegelungswelle (9) in die erste oder in die zweite Drehrichtung dreht.

2. Stromtankstelle nach Anspruch 1,
**dadurch gekennzeichnet,**
**dass** die Antriebseinheit eine elektrisch betätigbare Kolben/Zylindereinheit (10) ist, deren Kolben (11) über ein gelenkig gelagertes Zwischenglied (12) mit der Verriegelungswelle (9) verbunden ist.

3. Stromtankstelle nach Anspruch 1 oder 2,
**dadurch gekennzeichnet,**
**dass** an der Ladebuchse (5) eine Blockierungseinrichtung (19) für den Stecker (17) angeordnet ist, die eine Blockierungsnase (22) an einem schwenkbaren Hebel (20) aufweist, der von der Verriegelungswelle (9) zur Ladebuchse (5) hin gedrückt werden kann, dergestalt, dass die Blockierungsnase (22) in den Stecker eintritt.

4. Stromtankstelle nach Anspruch 3,
**dadurch gekennzeichnet,**
**dass** die Verriegelungswelle (9) eine sich über einen Umfangsabschnitt erstreckende Aussparung (24) aufweist, die eine solche Tiefe hat, dass der schwenkbare Hebel (20) in der zweiten Drehlage der Welle (9) in einem angehobenen Zustand in die Aussparung (24) eingreift, und dass die Tiefe der Aussparung (24) in Drehrichtung der Verriegelungswelle (9) zu der ersten Drehlage bis auf Null abnimmt, so dass der schwenkbare Hebel (20) von der sich drehenden Verriegelungswelle (9) in Richtung der Ladebuchse (5) gedrückt wird, so dass die Blockierungsnase (22) in eine Aussparung des Steckers (17) eingreift und von der Verriegelungswelle (9) darin gehalten ist.

5. Stromtankstelle nach einem der Ansprüche 3 oder 4,
**dadurch gekennzeichnet,**
**dass** der schwenkbare Hebel (20) durch Federkraft in die angehobene Stellung vorgespannt ist.

## Claims

1. An electricity charging point for motor vehicles with an electric drive including a housing with a flap (4) behind which there is a charging socket (5), into which, when the flap (4) is open, a plug (17) on a charging cable (18) is insertable, including a locking mechanism for the flap (4) and including a chip card read/identification device, wherein the locking mechanism includes a locking element (6) and a drive unit (10) for the locking element (6), which advances or retracts the locking element (6) in response to signals from the chip card read/identification device, **characterised in that** the locking mechanism includes a locking shaft (9), which is rotatable between two predetermined rotary positions, wherein the locking element (6) is hingedly connected to the locking shaft (9) and is movable between guide elements (14, 15) and, on rotation of the locking shaft (9) into a first rotary position, is advanced towards the flap (4) until it projects into the path of movement of the flap (4) and, on rotation of the locking shaft (9) into the second rotary position, is retracted from the flap (4) and wherein the drive unit (10) rotates the locking shaft (9) into the first or into the second rotary position in response to the signals from the chip card read/identification device.

2. An electricity charging point as claimed in claim 1, **characterised in that** the drive unit is an electrically operable piston/cylinder unit (10), the piston (11) of which is connected to the locking shaft (9) via a hingedly mounted intermediate element (12).

3. An electricity charging point as claimed in claim 1 or 2, **characterised in that** arranged on the charging socket (5) there is a blocking device (19) for the plug (17), which includes a blocking projection (22) on a pivotable lever (20), which can be pressed by the locking shaft (9) towards the charging socket (5) such that the blocking projection (22) enters into the plug.

4. An electricity charging point as claimed in claim 3, **characterised in that** the locking shaft (9) includes a recess (24) extending over a peripheral section, which has such a depth that the pivotable lever (20) engages in the recess (24) in the second rotary position of the shaft in a raised state and that the depth of the recess (24) in the direction of rotation of the locking shaft (9) towards the first rotary position decreases to zero so that the pivotable lever (20) is pressed by the rotating locking shaft (9) in the direction of the charging socket (5) so that the blocking projection (22) engages in a recess in the plug (17) and is retained therein by the locking shaft (9).

5. An electricity charging point as claimed in one of claims 3 or 4, **characterised in that** the pivotable lever (20) is biased by a spring force into the raised position.

## Revendications

1. Station service électrique pour véhicules automobiles avec un entraînement électrique, avec un boîtier présentant un volet (4), derrière lequel est disposée une prise de charge (5), dans laquelle lorsque le volet est ouvert (4), une fiche (17) d'un câble de chargement (18) peut être insérée, avec un mécanisme de verrouillage pour le volet (4) et un dispositif de lecture/identification de carte à puce,
sachant que le mécanisme de verrouillage présente un organe de verrouillage (6) et une unité d'entraînement (10) pour l'organe de verrouillage (6) qui avance ou recule l'organe de verrouillage (6) selon des signaux du dispositif de lecture/d'identification de carte à puce,
**caractérisée en ce que** le volet (4) est disposé de manière mobile ; et **en ce que** le mécanisme de verrouillage présente un arbre de verrouillage (9) qui peut être tourné entre deux positions rotatives prédéterminées, sachant que l'organe de verrouillage (6) est relié par articulation à l'arbre de verrouillage (9) et peut être déplacé entre des organes de guidage (14, 15), et est avancé lors de la rotation de l'arbre de verrouillage (9) dans un premier sens de rotation vers le volet (4) jusqu'à ce qu'il pénètre dans la trajectoire du volet (4), et est retiré du volet (4) lors de la rotation de l'arbre de verrouillage (9) dans le second sens de rotation et sachant que l'unité d'entraînement (10) fait tourner l'arbre de verrouillage (9) dans le premier ou dans le second sens de rotation selon les signaux du dispositif de lecture/d'identification de carte à puce.

2. Station service électrique selon la revendication 1, **caractérisée en ce que** l'unité d'entraînement est une unité à piston et cylindre actionnable électriquement (10), dont le piston (11) est relié par un organe intermédiaire (12) logé de manière articulée à l'arbre de verrouillage (9).

3. Station service électrique selon la revendication 1 ou 2, **caractérisée en ce qu'**un dispositif de blocage (19) pour la fiche (17) est disposé sur la prise de charge (5), lequel présente un nez de blocage (22) sur un levier pivotant (20), qui peut être pressé par l'arbre de verrouillage (9) vers la prise de charge (5) de telle manière que le nez de blocage (22) entre dans la fiche.

4. Station service électrique selon la revendication 3, **caractérisée en ce que** l'arbre de verrouillage (9) présente un évidement (24) s'étendant sur une section périphérique, dont la profondeur est telle que le levier pivotant (20) s'engage dans la seconde position rotative de l'arbre (9) dans un état relevé dans l'évidement (24), et **en ce que** la profondeur de l'évidement (24) se réduit jusqu'à zéro dans le sens de rotation de l'arbre de verrouillage (9) vers la première position rotative de sorte que le levier pivotant (20) soit pressé par l'arbre de verrouillage (9) tournant en direction de la prise de charge (5) de sorte que le nez de blocage (22) s'engage dans un évidement de la fiche (17) et soit maintenu dedans par l'arbre de verrouillage (9).

5. Station service électrique selon l'une quelconque des revendications 3 ou 4, **caractérisée en ce que** le levier pivotant (20) est précontraint par la force de ressort dans la position relevée.
